# EUROPÄISCHE PATENTSCHRIFT

(11) **EP 3 345 043 B1**
(45) Veröffentlichungstag und Bekanntmachung des Hinweises auf die Patenterteilung: **15.05.2024**
(21) Anmeldenummer: 16758157.8
(22) Anmeldetag: 29.08.2016
(51) Int. Cl.: G02C 7/08, G02B 27/01, B29D 11/00

(54) **BRILLENGLAS FÜR EINE ABBILDUNGSOPTIK ZUM ERZEUGEN EINES VIRTUELLEN BILDES UND VERFAHREN ZUM HERSTELLEN EINES DERARTIGEN BRILLENGLASES**
EYEGLASS LENS FOR AN IMAGING OPTICAL SYSTEM FOR PRODUCING A VIRTUAL IMAGE AND METHOD FOR PRODUCING SUCH AN EYEGLASS LENS
VERRE DE LUNETTERIE CONÇU POUR UN SYSTÈME OPTIQUE DE REPRODUCTION DESTINÉ À GÉNÉRER UNE IMAGE VIRTUELLE, ET PROCÉDÉ DE PRODUCTION D'UN TEL VERRE DE LUNETTERIE

(30) Priorität: 04.09.2015 DE 102015114833
(43) Veröffentlichungstag der Anmeldung: 11.07.2018
(73) Patentinhaber: tooz technologies GmbH, 73430 Aalen (DE)
(72) Erfinder: DOBSCHAL, Hans-Jürgen, 99510 Kleinromstedt (DE); LINDIG, Karsten, 99084 Erfurt (DE); MESCHENMOSER, Ralf, 73457 Essingen (DE); KRATZER, Timo, 73434 Aalen (DE)
(74) Vertreter: PATERIS Patentanwälte PartmbB
(86) Internationale Anmeldenummer: PCT/EP2016/070339
(87) Internationale Veröffentlichungsnummer: WO 2017/037030

(56) Entgegenhaltungen:
- WO-A1-2008/090000
- WO-A1-2012/088478
- WO-A1-2015/044297
- DE-A1-102013 214 700
- DE-B3-102013 223 964
- US-A1- 2012 057 122

## Beschreibung

Die vorliegende Erfindung betrifft ein Verfahren zum Herstellen eines Brillenglases für eine Abbildungsoptik zum Erzeugen eines virtuellen Bildes sowie ein Brillenglas-Halbfabrikat, das im Verfahren zum Herstellen des Brillenglases Verwendung findet.

Eine Datenbrille ist eine spezielle Form eines Head Mounted Displays. Eine gängige Form von Head Mounted Displays verwendet Bildschirme, die vor den Augen getragen werden und dem Benutzer computergenerierte Bilder oder von Kameras aufgenommene Bilder präsentieren. Derartige Head Mounted Displays sind häufig voluminös und erlauben keine unmittelbare Wahrnehmung der Umgebung. In jüngerer Zeit sind Head Mounted Displays entwickelt worden, die in der Lage sind, dem Benutzer ein mit einer Kamera aufgenommenes Bild oder ein computergeneriertes Bild darzubieten, ohne die unmittelbare Wahrnehmung der Umgebung zu verhindern. Derartige Head Mounted Displays, die nachfolgend Datenbrillen genannt werden, ermöglichen die Nutzung dieser Technologie im alltäglichen Leben.

Datenbrillen können auf verschiedene Arten bereitgestellt werden. Eine Art der Datenbrille, die sich insbesondere durch ihre Kompaktheit und ästhetische Akzeptanz auszeichnet, beruht auf dem Prinzip der Wellenleitung im Brillenglas. Dabei wird von einem Bildgeber generiertes Licht außerhalb des Brillenglases kollimiert und über die Stirnfläche des Brillenglases eingekoppelt, von wo aus es sich über mehrfache Reflexion bis vor das Auge ausbreitet. Ein dort befindliches optisches Element koppelt das Licht dann in Richtung auf die Augenpupille aus. Die Einkopplung in das Brillenglas und die Auskopplung aus dem Brillenglas können dabei entweder diffraktiv, reflektiv oder refraktiv erfolgen. Bei einem diffraktiven Ein- oder Auskoppeln finden als Ein- und Auskopplungselemente Beugungsgitter annähernd gleicher Strichzahl Verwendung, wobei die stark dispersiven Wirkungen der einzelnen Gitter untereinander kompensiert werden. Auf Beugungsgittern beruhende Ein- und Auskoppelelemente sind beispielsweise in US 2006/0126181 A1 und in US 2010/0220295 A1 beschrieben. Beispiele für Datenbrillen mit reflektiven oder refraktiven Ein- oder Auskoppelelementen sind in US 2012/0002294 A1 beschrieben.

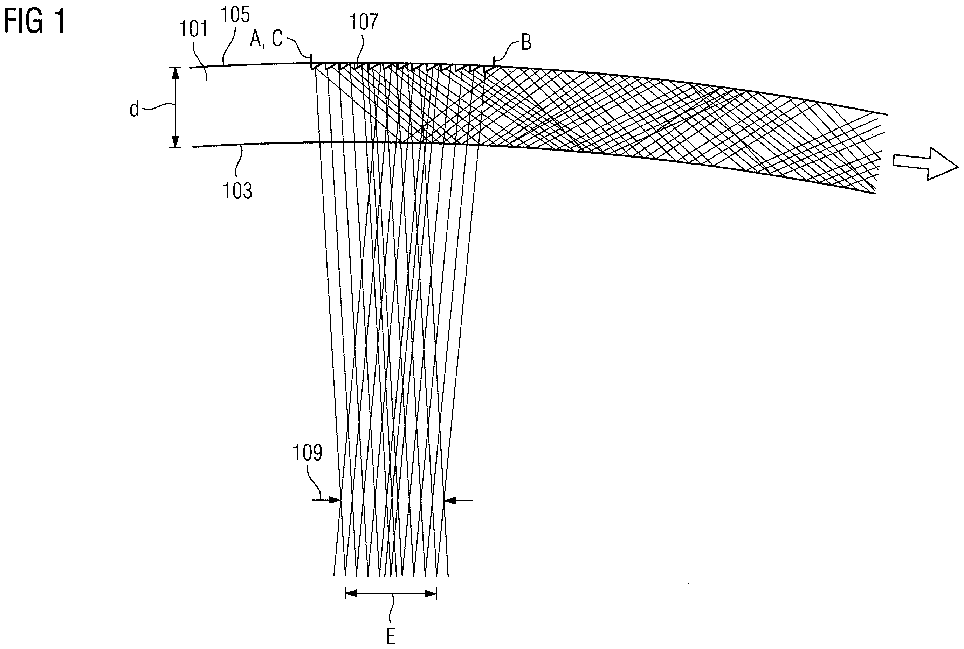

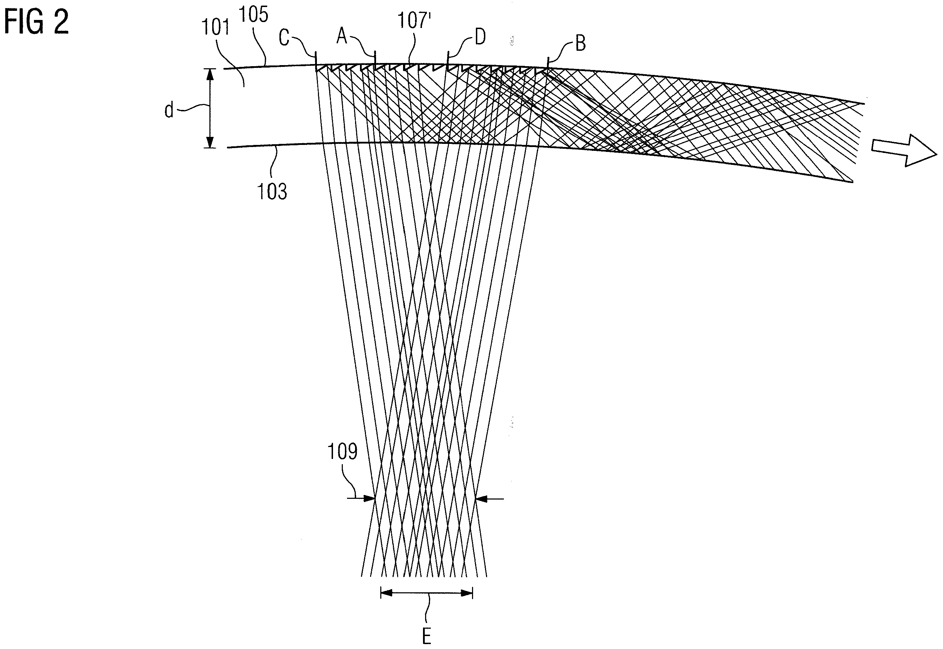

Datenbrillen, bei denen ein Abbildungsstrahlenbündel unter mehrfacher Reflexion von einem Einkoppelelement zu einem Auskoppelelement geleitet wird, haben unabhängig davon, ob als Ein- und Auskoppelelemente diffraktive, reflektive oder refraktive Elemente Verwendung finden, die Problematik des sogenannten "Footprint Overlap" gemeinsam. Diese Problematik, die die Größe des Sichtfeldes (FOV field of view) sowie die Größe der Austrittspupille der Datenbrille am Ort der Eyebox begrenzt und aufgrund der eine relativ hohe Brillenglasdicke notwendig ist, wird nachfolgend anhand der Figuren 1 und 2 näher erläutert.

Die Eyebox ist derjenige dreidimensionale Bereich der Lichtröhre im Abbildungsstrahlengang, in dem sich die Augenpupille bewegen kann, ohne dass eine Vignettierung des Bildes erfolgt. Da bei einer Datenbrille der Abstand des Auges in Bezug auf die Datenbrille im Wesentlichen konstant ist, kann die Eyebox auf eine zweidimensionale Eyebox, welche lediglich die Drehbewegungen des Auges berücksichtigt, reduziert werden. In diesem Fall entspricht die Eyebox im Wesentlichen der Austrittspupille der Datenbrille am Ort der Eintrittspupille des Auges. Letztere ist in der Regel durch die Augenpupille gegeben. Obwohl es sich bei einer Datenbrille um ein System handelt, mit dem ein Abbildungsstrahlengang vom Bildgeber zur Austrittspupille der Datenbrille verläuft, ist es zum Verständnis des "Footprint Overlap" hilfreich, den Strahlengang in umgekehrter Richtung, also von der Austrittspupille zum Bildgeber, zu betrachten. Es wird daher bei den nachfolgenden Darlegungen eine von der Ausgangspupille der Datenbrille, ausgehende Lichtröhre betrachtet, wobei die Grenzen der Lichtröhre durch die Sichtfeldwinkel der sich von jedem Punkt der Eyebox in Richtung auf das Brillenglas ausbreitenden Strahlenbündel bestimmt ist.

Nach Brechung an der Innenfläche 103 des Brillenglases 101 treffen die Strahlen in der Lichtröhre auf die Außenfläche 105 des Brillenglases 101 auf. In dieser befindet sich die Auskopplungsstruktur 107, welche sich in horizontaler Richtung von Punkt B zum Punkt C erstreckt. Der Abstand zwischen den Punkten B und C wird durch die gewünschte Ausdehnung der Lichtröhre bestimmt, die wiederum von der gewünschten Größe der Eyebox 109 und dem gewünschten Sichtfeldwinkel abhängt. Der Sichtfeldwinkel ist hier in erster Linie der horizontale Sichtfeldwinkel, welcher denjenigen Winkel bezogen auf die Sehachse betrifft, unter dem die horizontalen Randpunkte des Bildfeldes in die Pupille einfallen. Die Sehachse bezeichnet dabei eine gerade Linie zwischen der Fovea des Auges (Punkt des schärfsten Sehens der Netzhaut) und dem Mittelpunkt des Bildfeldes. In Figur 1 ist der Verlauf der Lichtröhre bei einem Eye-Box-Durchmesser E und einer Dicke d des Brillenglases 101 für einen relativ kleinen Sichtfeldwinkel dargestellt. Alle Strahlen der Lichtröhre werden aus der Auskopplungsstruktur 107 in Richtung der Innenfläche 103 des Brillenglases 101 gebeugt oder reflektiert und von dort an die Außenfläche 105 des Brillenglases 101 zurückreflektiert, von wo aus sie wieder auf die Innenfläche 103 des Brillenglases 101 zurückreflektiert werden. Diese Hin-und-Her-Reflexion geschieht solange, bis das Einkoppelelement erreicht ist, von wo aus die Lichtröhre dann in Richtung auf den Bildgeber weiter verläuft.

Wenn, wie in Figur 1 dargestellt, der Sichtfeldwinkel relativ gering ist, treffen die Strahlen der Lichtröhre nach der ersten Reflexion an der Innenfläche 103 des Brillenglases 101 auf einen Bereich der Außenfläche 105 des Brillenglases 1, der außerhalb des Auskopplungselementes 107 liegt (in Fig. 1 rechts neben dem Punkt B). Wenn dagegen ein großer Sichtfeldwinkel gewünscht ist, wie dies in Figur 2 dargestellt ist, ist eine entsprechend vergrößerte Auskopplungsstruktur 107` notwendig. Dies führt jedoch dazu, dass Strahlen der Lichtröhre, die auf den zwischen den Punkten A und C gelegenen Abschnitt der Auskopplungsstruktur 107` auftreffen, nach der ersten Reflexion an der Innenfläche 103 des Brillenglases 101 auf einen Bereich der Außenfläche 105 des Brillenglases 101 zurückreflektiert werden, in dem sich noch die Auskopplungsstruktur 107` befindet. Dieser Bereich, im folgenden Überlappbereich genannt, befindet sich in Figur 2 zwischen den Punkten B und D. Aufgrund des Vorhandenseins des Auskopplungselementes, welches bei der in Figur 2 gewählten Darstellung ein diffraktives oder reflektives Auskopplungselement sein kann, werden die von der Innenfläche 103 des Brillenglases 101 in den Bereich zwischen B und D reflektierten Strahlen nicht in Richtung auf die Innenfläche 103 zurückreflektiert, so dass diese für die Abbildung verloren gehen.

Eine ähnliche Problematik tritt auch auf, wenn nicht der Sichtfeldwinkel vergrößert wird, sondern der Durchmesser der Eyebox. Auch in diesem Fall würde es Punkte A und C geben, zwischen denen sich ein Bereich befindet, der Strahlen in Richtung auf die Innenfläche 103 des Brillenglases 101 reflektiert, die von dort wiederum in einen durch die Punkte B und D gekennzeichneten Bereich der Auskopplungsstruktur 107` zurückreflektiert werden und daher für die Abbildung unbrauchbar sind. Entsprechendes würde auch gelten, wenn der Eye-Box-Durchmesser E und der Sichtfeldwinkel beibehalten würden und dafür die Dicke d des Brillenglases verringert würde. Mit anderen Worten, ein hinreichend großer Eye-Box-Durchmesser E bei einem hinreichend großen Sichtfeldwinkel kann nur mit einer gewissen Mindestdicke d des Brillenglases erreicht werden.

Es sei an dieser Stelle noch einmal darauf hingewiesen, dass für die obige Betrachtung der Strahlengang umgekehrt worden ist, und dass der tatsächliche Strahlengang vom Bildgeber in die Austrittspupille der Datenbrille verläuft. An der grundsätzlichen Betrachtung ändert dies jedoch nichts, da vom Bildgeber kommende Strahlen, die im Bereich zwischen den Punkten B und D auf die Auskopplungsstruktur 107` auftreffen, nicht in die Austrittspupille reflektiert werden, da sie nicht in Richtung auf die Innenfläche des Brillenglases zurückreflektiert werden, was jedoch nötig wäre, um den Bereich der Auskopplungsstruktur 107' zwischen den Punkten A und C zu erreichen, von wo aus sie in Richtung auf die Austrittspupille ausgekoppelt werden könnten.

Die WO 2012/088478 A1 beschreibt einen Lichtwellenleiter für eine Datenbrille, der eine Mehrzahl an Freiformflächen enthalten kann.

Die US 2012/0057122 A1 beschreibt ein Brillenglas mit komplexen Flächen.

Die WO 2015/044297 A1 beschreibt eine Auskopplungsstruktur für ein Brillenglas einer Datenbrille. Die Auskopplungsstruktur kann mittels einer Folie hergestellt werden, aus der reflektive Facetten ausgeschnitten und zwischen zwei Freiformplatten befestigt werden.

Die WO 2008/090000 A1 beschreibt, ein Brillenglas für eine Datenbrille, die ein Prismenteil aufweist. Die augenseitige Fläche des Prismenteils oder die objektseitige Fläche des Prismenteils ist als Freiformfläche ausgebildet.

In WO 2015/075207 A1 und DE 10 2013 214 700 A1 sind Abbildungsoptiken für eine Datenbrille beschrieben, die ein Brillenglas mit einem Einkopplungsabschnitt zum Einkoppeln eines Abbildungsstrahlengangs in das Brillengals aufweisen und in denen im Bereich des Einkopplungsabschnittes eine Randverdickung des Brillenglases vorhanden ist. Mit einer derartigen Randverdickung kann der oben beschriebene Footprint Overlap verringert werden. Um die Randverdickung zu realisieren weist die ansonsten sphärische Brillenglasinnenfläche einen Flächenabschnitt auf, der als Freiformfläche ausgebildet ist. Die sphärische Fläche und die Freiformfläche sind dabei in zueinander verschobenen und verdrehten Koordinatensystemen definiert und werden in zwei unterschiedlichen Bearbeitungsschritten hergestellt.

Gegenüber dem beschriebenen Stand der Technik ist eine Aufgabe der vorliegenden Erfindung, ein vorteilhaftes Verfahren zum Herstellen eines Brillenglases mit Randanpassung für eine Abbildungsoptik zum Erzeugen eins virtuellen Bildes von einem auf einem Bildgeber dargestellten Ausgangsbild zur Verfügung zu stellen.

Diese Aufgabe wird durch ein Verfahren nach Anspruch 1 zum Herstellen eines Brillenglases gelöst. Die abhängigen Ansprüche enthalten vorteilhafte Ausgestaltungen der Erfindung.

Ein Brillenglas für eine Abbildungsoptik zum Erzeugen eines virtuellen Bildes von einem auf einem Bildgeber dargestellten Ausgangsbild, das mit dem erfindungsgemäßen Verfahren hergestellt wird, weist eine dem Auge zuwendende Innenfläche und eine vom Auge abzuwendende Außenfläche auf und umfasst einen Einkopplungsabschnitt zum Einkoppeln eines Abbildungsstrahlengangs zwischen die Innenfläche und die Außenfläche und eine in dem Brillenglas vorhandene Auskopplungsstruktur zum Auskoppeln des Ausbildungsstrahlengangs aus dem Brillenglas in Richtung auf das Auge. Die Auskopplungsstruktur kann beispielsweise als Fresnelstruktur ausgebildet sein. Der Einkopplungsabschnitt ist derart im Brillenglas angeordnet, dass ein durch den Einkopplungsabschnitt das Brillenglas eingekoppelte Abbildungsstrahlengang durch Reflektionen zwischen der Innenfläche und der Außenfläche zur Auskopplungsstruktur geleitet wird.

Zwischen dem Einkopplungsabschnitt und der Auskopplungsstruktur ist im Brillenglas eine Randanpassung vorhanden, die durch eine entsprechende Formgebung der Innenfläche des Brillenglases realisiert ist.

Die Innenfläche weist in demjenigen Bereich des Brillenglases, durch den das Auge bei Geradeaussicht schaut, im Wesentlichen eine Krümmung auf, die an die Krümmung einer gewöhnlichen Innenfläche eines Brillenglases mit oder ohne Korrektur einer Fehlsichtigkeit soweit angenähert ist, dass durch sie bei Geradeaussicht keine wahrnehmbaren optischen Abbildungsfehler induziert werden. Im Bereich der Randanpassung weist die Innenfläche dann eine von der Krümmung der gewöhnlichen Innenfläche stärker abweichende Formgebung auf, die das Leiten eines durch den Einkopplungsabschnitt in das Brillenglas eingekoppelten Abbildungsstrahlengangs durch Reflexionen zwischen der Innenfläche und der Außenfläche des Brillenglases zur Auskopplungsstruktur ermöglicht. Im Bereich der Randanpassung kann die Dicke des Brillenglases größer oder kleiner als im Bereich der Auskopplungsstruktur sein. Bei einem Brillenglas ohne Korrektur einer Fehlsichtigkeit, also ohne Brechkraft, oder einem Brillenglas mit negativer Brechkraft ist die Dicke des Brillenglases im Bereich der Randanpassung in der Regel größer als die Dicke im Bereich der Auskopplungsstruktur, so dass die Randanpassung eine Randverdickung darstellt. Bei einem Brillenglas mit positiver Brechkraft kann die Dicke des Brillenglases im Bereich der Randanpassung kleiner als die Dicke im Bereich der Auskopplungsstruktur sein, so dass die Randanpassung in diesem Fall eine Randverdünnung darstellt.

Im Brillenglas, das mit dem erfindungsgemäßen Verfahren hergestellt wird, ist die gesamte Innenfläche des Brillenglases eine einzige Freiformfläche, wobei der Begriff Freiformfläche eine nicht rotationssymmetrische Fläche beschreibt. Hierdurch wird es zum einen möglich, die gesamte Innenfläche in einem einzigen Bearbeitungsschritt herzustellen. Zum anderen erlaubt es die Ausgestaltung als eine einzige Freiformfläche, einen fließenden Übergang von der Innenfläche in demjenigen Bereich des Brillenglases, durch den das Auge bei Geradeaussicht schaut, zum Bereich der Randanpassung zu realisieren. Hierzu kann insbesondere die gesamte Freiformfläche eine stetig differenzierbare Fläche sein. In diesem Fall ist auch der Übergang zwischen der Innenfläche in demjenigen Bereich, durch den das Auge bei Geradeaussicht schaut, und dem Bereich der Randanpassung durch die stetig differenzierbare Funktion beschrieben, wodurch ein besonders glatter Übergang realisiert werden kann, der eine Verringerung des Footprint Overlaps ermöglicht. Falls das Brillenglas eine positive Brechkraft aufweist, kann es vorteilhaft sein, wenn die Brillenglasinnenfläche im Bereich der Randanpassung gewellt ist, um einen geeigneten Reflexionswinkel für den Abbildungsstrahlengang zu realisieren.

Im eingangs beschriebenen Stand der Technik kann dagegen bestenfalls ein stetiger, nicht aber ein stetig differenzierbarer Übergang zwischen dem sphärischen Abschnitt der Brillenglasinnenfläche und der Randanpassung erzielt werden, da die sphärische Fläche und die Freiformfläche in unterschiedlichen Koordinatensystemen definiert sind und daher nicht durch eine gemeinsame Flächenbeschreibung realisiert werden können. Dementsprechend sind die beiden Flächen in verschiedenen Bearbeitungsschritten zu fertigen, was zu einem nicht stetig differenzierbaren Übergang zwischen dem sphärischen Abschnitt der Brillenglasinnenfläche und der Randanpassung führt. Das Fehlen der stetigen Differenzierbarkeit bedeutet aber, dass zumindest ein Knick vorhanden ist, welcher die optischen Eigenschaften des Übergangs nachteilig beeinflusst.

Die Problematik, zu deren Überwindung die vorliegende Erfindung einen Beitrag leistet, besteht dabei darin, dass man dafür sorgen muss, das Strahlenbündel des Abbildungsstrahlengangs, die von der Auskopplungsstruktur ausgehen, zunächst vollständig den sphärischen Bereich der Brillenglasinnenfläche reflektierend treffen müssen, bevor sie über eine danach folgende Reflektion an der Brillenglasaußenfläche auf den durch die Freiformfläche gegebenen Abschnitt treffen und diesen dabei vollständig berühren müssen. Wenn ein Teil des Strahlenbündels außerhalb des Bereiches der Freiformfläche reflektiert wird, kann dies folgende negative Auswirkungen haben:
1. In einem eingespiegelten Bild können Strahlen für gleiche Feldpunkte jeweils aus den beiden verschiedenen Bereichen stammen, was zu erheblichen Bildfehlern und Doppelbildern führt.
2. Diejenigen Teile eines Strahlenbündels, die nicht den vorgesehenen Weg zwischen der Freiformfläche und der Auskopplungsstruktur nehmen, kommen nicht in der Eye-Box an, was zu einem Aperturbeschnitt führt.
3. Es können zusätzliche Falschlichtpfade entstehen, die im Bild ankommen.

Während die unter Punkt 2 genannte Problematik lediglich einen Aperturbeschnitt und etwas Auflösungsverlust mit sich bringt, ist insbesondere Punkt 1 nachteilig, da dieser Fall vom Betrachter stark wahrgenommen wird. Durch die aufgrund der Beschreibung der gesamten Innenfläche des Brillenglases durch eine einzige Freiformfläche mögliche Realisierung eines stetig differenzierbaren Übergangs zur Randanpassung kann die beschriebene Problematik erheblich vermindert werden, da ein Knick an der Grenzlinie zur Freiformfläche vermieden werden kann.

Wie schon bei der Betrachtung mit Bezug auf die Figuren 1 und 2 wurde bei der Betrachtung der Problematik, zu deren Überwindung die vorliegende Erfindung einen Beitrag leistet, zur besseren Veranschaulichung des Sachverhaltes ein Strahlenbündel betrachtet, welches vom Auge in Richtung auf den Bildgeber verläuft, obwohl der tatsächliche Verlauf des Strahlenbündels vom Bildgeber zum Auge gegeben ist.

Im Rahmen der vorliegenden Erfindung kann die gesamte Außenfläche des Brillenglases eine Krümmung aufweisen, die der Krümmung einer gewöhnlichen Brillenglasaußenfläche mit oder ohne Korrektur einer Fehlsichtigkeit entspricht. Mit anderen Worten, die Außenfläche des Brillenglases trägt ebenso wenig zur Herstellung der Randanpassung bei wie die Innenfläche des Brillenglases in demjenigen Bereich, durch den das Auge bei Geradeaussicht schaut. Die Innenfläche des Brillenglases in demjenigen Bereich, durch den das Auge bei Geradeaussicht schaut, und die gesamte Außenfläche des Brillenglases können hierbei insbesondere eine sphärische Krümmung aufweisen.

In einer Weiterbildung des Brillenglases, das mit dem erfindungsgemäßen Verfahren hergestellt wird, wird auf der Innenfläche und/oder auf der Außenfläche wenigstens eine weitere Glas- oder Kunststoffschicht aufgebracht, insbesondere eine Glas- oder Kunststoffschicht, die eine teilreflektive Grenzfläche an der Innenfläche und/oder der Außenfläche ausbildet. Dies eröffnet die Möglichkeit, für die Reflexion an der Innenfläche und/oder der Außenfläche auf Reflexionen an teilreflektiven Flächen statt wie beim Angrenzen der Innenfläche und/oder auf der Außenfläche an Luft auf Totalreflexionen zurückzugreifen. Die Glas- oder Kunststoffschicht kann in Form einer Beschichtung, einer Folie oder eines angeklebten Glas- oder Kunststoffelementes auf die Innenfläche und/oder die Außenfläche aufgebracht sein.

Eine Abbildungsoptik zum Erzeugen eines virtuellen Bildes umfasst einen Bildgeber zum Darstellen eines Ausgangsbildes für ein virtuelles Bild und ein Brillenglas, das mit dem erfindungsgemäßen Verfahren hergestellt wird. Zudem kann die Abbildungsoptik eine am Einkopplungsabschnitt des Brillenglases angeordnete Einkopplungseinrichtung zum Einkoppeln des Abbildungsstrahlengangs durch den Einkopplungsabschnitt in das Brillenglas aufweisen. Eine derartige Einkopplungseinrichtung kann insbesondere eine Prismenstruktur besitzen. Außerdem kann eine Datenbrille eine derartige Abbildungsoptik aufweisen.

Im Rahmen der vorliegenden Erfindung wird ein Verfahren zum Herstellen eines Brillenglases für eine Abbildungsoptik zum Erzeugen eines virtuellen Bildes von einem auf einem Bildgeber dargestellten Ausgangsbild zur Verfügung gestellt. Dieses Verfahren umfasst die Schritte:
- Bereitstellen eines Brillenglas-Halbfabrikats, auch Blank oder Puck genannt, aus einem organischen oder mineralischen Glasmaterial, wobei das Brillenglas-Halbfabrikat bereits die Auskopplungsstruktur, die Außenfläche des späteren Brillenglases und eine Roh-Innenfläche des späteren Brillenglases besitzt. Als Roh-Innenfläche ist dabei eine Innenfläche anzusehen, die eine Standardkrümmung aufweist. Das Herstellen des Brillenglas-Halbfabrikats kann bspw. mittels eines Gussverfahrens, insbesondere mittels eines Spritzgussverfahrens erfolgen.
- Herstellen des Brillenglases aus dem Brillenglas-Halbfabrikat, wobei mittels eines CNC-Prozesses auf der Basis hinterlegter CNC-Daten, die für die gesamte Innenfläche in demselben Koordinatensystem definiert sind, die Innenfläche des Brillenglases aus der Roh-Innenfläche des Brillenglas-Halbfabrikats hergestellt wird.

Dadurch, dass gemäß des erfindungsgemäßen Verfahrens die gesamte Innenfläche des Brillenglases mittels eines einzigen CNC-Prozesses auf der Basis für die gesamte Innenfläche hinterlegter CNC-Daten hergestellt wird, wird es möglich, ein Brillenglas für eine Abbildungsoptik herzustellen, dass eine Randanpassung aufweist und bei dem der Übergang zwischen der Randanpassung und dem Rest der Brillenglasinnenfläche eine stetig differenzierbare Krümmung aufweist. Das erfindungsgemäße Herstellungsverfahren ermöglicht es daher, Brillenglasinnenflächen mit Randanpassung ohne Knick oder sichtbare Kante im Übergang zwischen der Randanpassung und den übrigen Bereichen des Brillenglases herzustellen. Im Unterschied dazu werden Brillengläser nach Stand der Technik entweder monolithisch hergestellt, d.h. sie werden komplett in einem Spritzgussverfahren hergestellt, oder sie werden aus zwei Teilen hergestellt, wobei jeder Teil in einem eigenen Spritzgussverfahren hergestellt wird. Die monolithische Herstellungsweise erfordert jedoch höchst komplexe Spritzgussprozesse, und generiert Spannungsdoppelbrechung, was zu Einschränkungen in der optischen Abbildung führt. Zudem ist die Zahl der Fertigungsschritte bei der monolithischen Herstellung extrem hoch, wodurch der Prozessablauf sehr komplex ist. Beim zweiteiligen Design reduziert sich zwar die Komplexität des Spritzgussverfahrens, und auch die Problematiken der Spannungsdoppelbrechung und des komplexen Produktionsablaufs sind gegenüber dem monolithischen Design verringert, jedoch ist nicht ohne weiteres eine ästhetische Integration der beiden Komponenten möglich. Zudem werden beim zweiteiligen Design typischerweise die Brillenglasinnenfläche im Bereich der Randanpassung und im Übrigen Bereich aus zwei unterschiedlichen Teilen gefertigt, die nach der getrennten Fertigung zusammengesetzt werden. Dadurch entsteht im Bereich des Übergangs zwischen den beiden Bereichen eine Kante, die zu der eingangs diskutierten Problematik des Footprint Overlap beiträgt.

Im Gegensatz dazu kann mit dem erfindungsgemäßen Verfahren ein Brillenglas für eine Abbildungsoptik hergestellt werden, bei dem weder ein Knick oder eine Kante im Bereich des Übergangs zwischen der Brillenglasinnenfläche im Bereich der Randanpassung und der Brillenglasinnenfläche in den übrigen Bereichen des Brillenglases gebildet wird, noch Spannungsdoppelbrechung auftritt.

Im Rahmen des erfindungsgemäßen Verfahrens kann der Rohling beispielsweise mittels eines Gießprozesses insbesondere mittels eines Spritzgussprozesses, hergestellt werden. Das im erfindungsgemäßen Verfahren mit dem Gießprozess lediglich eine Roh-Innenfläche hergestellt zu werden braucht, ist die Komplexität des Gießprozesses deutlich geringer als die Komplexität des Gießprozess bei der der monolithischen Herstellung.

In dem erfindungsgemäßen Verfahren wird das Brillenglas-Halbfabrikat vorzugsweise eines aus einer vorgegebenen Anzahl von Standard-Brillenglas-Halbfabrikaten ausgewählt, die sich dadurch voneinander unterscheiden, dass die Außenflächen und die Roh-Innenflächen verschiedener Standard-Brillenglas-Halbfabrikate jeweils von den Krümmungen anderer Standard-Brillenglas-Halbfabrikate verschiedene Krümmungen aufweisen, wobei die Krümmungen aus einer Anzahl von Grundkrümmungen ausgewählt sind. Die Grundkrümmungen können beispielsweise so gewählt sein, dass sich die Brechkräfte der Standardrohlinge jeweils um eine Dioptrie voneinander unterscheiden.

Das Vorsehen einer Anzahl von verschiedenen Standard-Brillenglas-Halbfabrikaten ermöglicht es, Brillengläser für Abbildungsoptiken mit unterschiedlichen Korrekturen von Fehlsichtigkeiten ohne großen Aufwand herzustellen. Es braucht lediglich das geeignete Brillenglas-Halbfabrikat aus einem Sortiment von Standard-Brillenglas-Halbfabrikaten ausgewählt zu werden. Das ausgewählte Standard-Brillenglas-Halbfabrikat weist dann bereits die finale Außenfläche auf, welche einer der Standardkrümmungen entspricht. Da auch die Roh-Innenfläche des Standard-Brillenglas-Halbfabrikats bereits eine Krümmung aufweist, die bereits der finalen Krümmung der Innenfläche recht nahe kommt, kann der Bearbeitungsaufwand beim Herstellen der Innenfläche des Brillenglases aus der Roh-Innenfläche relativ gering gehalten werden. Die genaue Form der Brillenglasinnenfläche außerhalb der Randanpassung kann dann ebenso wie die Fläche im Bereich der Randanpassung mittels des CNC-Prozesses erfolgen. Auf diese Weise besteht die Möglichkeit, mit einer überschaubaren Anzahl an Grundkrümmungen eine hohe Anzahl an Wirkflächen für eine Korrektur einer Fehlsichtigkeit zur Verfügung zu stellen. Beispielsweise ist es möglich, mit nur sieben Grundkrümmungen 70% der benannten Wirkflächen zu erzeugen. Erhöht man die Anzahl der Grundkrümmungen auf 13, lassen sich alle bekannten Wirkflächen abdecken. Jeder der Grundkrümmungen kann dabei eine vorgegebene Form der Roh-Innenfläche im Bereich der Randanpassung zugeordnet sein, die genau auf die jeweilige Grundkrümmung angepasst ist. Zudem ist es vorteilhaft, wenn in den Standard-Brillenglas-Halbfabrikaten auch für jede Grundkrümmung eine angepasste Auskopplungsstruktur vorliegt, da dies ebenfalls zur Qualität der Abbildungsoptik beiträgt. Mit anderen Worten, es ist besonders vorteilhaft, wenn für jede Grundkrümmung eine eigene Klasse von CNC-Daten vorhanden ist, wobei sich die Klassen von CNC-Daten zumindest durch die Definitionen der Brillenglasinnenfläche im Bereich der Randanpassung voneinander unterscheiden.

Besonders effektiv lassen sich Kanten und Knicke am Übergang zwischen der Innenfläche im Bereich der Randanpassung und der übrigen Fläche des Brillenglases vermeiden, wenn die CNC-Daten, welche eine zu fertigende Innenfläche definieren, eine an jedem Punkt stetig differenzierbare Fläche repräsentieren. Wenn lediglich eine stetige Fläche definiert würde, würde dies Knicke aufweisende Flächen nicht ausschließen.

Das Herstellen der Innenfläche des Brillenglases aus der Roh-Innenfläche kann insbesondere einen Frässchritt, einen Vordrehschritt, einen Feindrehschritt und einen Polierschritt umfassen. Diese Schritte sind aus der Herstellung von Brillenglas-Halbfabrikaten bereits bekannt, so dass auf eine gut beherrschbare Technologie zurückgegriffen werden kann.

In einer Weiterbildung des erfindungsgemäßen Verfahrens umfasst dieses außerdem einen Schritt des Herstellens einer Einkopplungseinrichtung, die insbesondere eine Prismenstruktur aufweisen kann. Beim Herstellen des Brillenglas-Halbfabrikats oder beim Herstellen der Innenfläche des Brillenglases ist es in diesem Fall vorteilhaft, wenn an der Roh-Innenfläche bzw. an der Innenfläche auch ein Einkopplungsabschnitt zum Einkoppeln des Abbildungsstrahlengangs hergestellt wird. Dieser Einkopplungsabschnitt kann insbesondere einen Teil der Innenfläche im Bereich der Randanpassung oder angrenzend an die Randanpassung sein. Das Herstellen einer Abbildungsoptik aus dem Brillenglas-Halbfabrikat kann dann insbesondere auch den Schritt des Verbindens der Einkopplungseinrichtung mit dem Einkopplungsabschnitt umfassen. Grundsätzlich besteht aber auch die Möglichkeit, dass dieser Schritt bereits beim Herstellen des Brillenglas-Halbfabrikats erfolgt.

Im Rahmen des erfindungsgemäßen Verfahrens kann ein Brillenglas-Halbfabrikat, auch Blank oder Puck genannt, zur Herstellung des Brillenglases für eine Abbildungsoptik zum Erzeugen eines virtuellen Bildes von einem auf einem Bildgeber dargestellten Ausgangsbild Verwendung finden. Das Brillenglas-Halbfabrikat besteht aus einem gegossenen (mineralischen oder organischen) Glasmaterial. Außerdem ist im Brillenglas-Halbfabrikat eine Auskopplungstruktur, bspw. Fresnelstruktur, eine Außenfläche des späteren Brillenglases und eine Roh-Innenfläche des späteren Brillenglases vorhanden.

Das Brillenglas-Halbfabrikat kann wie oben beschrieben im erfindungsgemäßen Verfahren zum Herstellen eines Brillenglases für eine Abbildungsoptik Verwendung finden. Mit dem Brillenglas-Halbfabrikat zu erzielende Vorteile und vorteilhafte weitere Ausgestaltungen des Brillenglas-Halbfabrikats wurden bereits mit Bezug auf das erfindungsgemäße Verfahren beschrieben.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt einen Ausschnitt aus einem Abbildungsstrahlengang in einer Datenbrille nach Stand der Technik mit einem kleinen Sichtfeldwinkel.
- Figur 2: zeigt einen Ausschnitt aus einem Abbildungsstrahlengang in einer Datenbrille nach Stand der Technik mit einem großen Sichtfeldwinkel.
- Figur 3: zeigt eine Datenbrille in einer perspektivischen Darstellung.
- Figur 4: zeigt ein Brillenglas und eine Einkopplungsvorrichtung der Datenbrille aus Figur 1 in einer schematischen Darstellung.
- Figur 5: zeigt eine Auskopplungsstruktur, wie sie im Brillenglas aus Figur 4 Verwendung finden kann.
- Figur 6: zeigt der Verlauf der Randanpassung bei einem Brillenglas mit negativer Brechkraft.
- Figur 7: zeigt der Verlauf der Randanpassung bei einem Brillenglas mit neutraler Brechkraft.
- Figur 8: zeigt der Verlauf der Randanpassung bei einem Brillenglas mit positiver Brechkraft.
- Figur 9: zeigt ein Ablaufdiagramm für das Herstellen eines Brillenglases für eine Abbildungsoptik aus einem Brillenglas-Halbfabrikat.
- Figur 10: zeigt ein Beispiel für ein Brillenglas-Halbfabrikat vor der Herstellung eines Brillenglases.
- Figur 11: zeigt das Brillenglas-Halbfabrikat aus Figur 10 nach dem Herstellen der Brillenglasinnenfläche.
- Figur 12: zeigt ein Ablaufdiagramm für das Herstellen eines Standard-Brillenglas-Halbfabrikats und der zugehörigen Einkopplungsstruktur.

Nachfolgend wir die Abbildungsoptik am Beispiel einer mit einer solchen Abbildungsoptik ausgestatteten Datenbrille beschrieben.

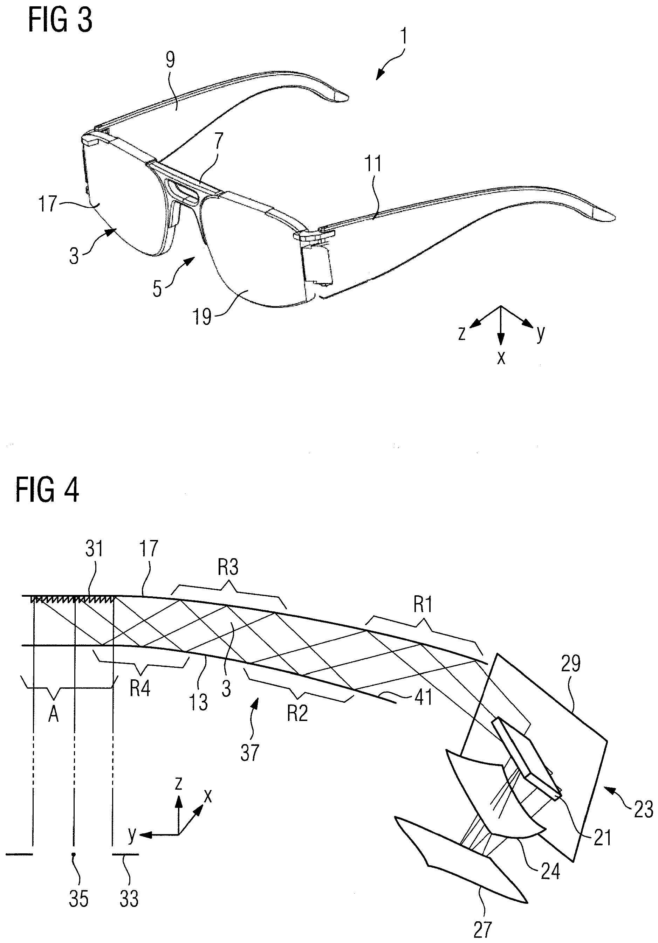

Eine mit einer Abbildungsoptik ausgestattete Datenbrille 1 ist in Figur 3 gezeigt. Die Abbildungsoptik selbst, die im Wesentlichen ein Brillenglas 3 umfasst, ist in Figur 4 dargestellt, welche die Abbildungsoptik in einer schematischen Darstellung zum Erläutern ihrer Funktionsweise zeigt.

Die Datenbrille 1 umfasst zwei Brillengläser 3, 5, die von einem Brillengestell 7 mit zwei Brillenbügeln 9, 11 gehalten werden. Die Brillengläser weisen jeweils eine bei aufgesetzter Brille zum Auge des Benutzers weisende Innenfläche 13, 15 (in Figur 4 zu sehen) und eine vom Auge des Benutzers weg weisende Außenfläche 17, 19 (in den Figuren 3 und 4 zu sehen) auf. Im vorliegenden Ausführungsbeispiel befindet sich im Brillenbügel 9 oder zwischen dem Brillenbügel 9 und dem Brillenglas 17 ein Bildgeber 21 (in Figur 4 gezeigt), der beispielsweise als Flüssigkristallanzeige (LCD-Display), als auf Leuchtdioden basierendes Display (LED-Display) oder als auf organischen Leuchtdioden basierendes Display (OLED-Display) ausgebildet sein kann. Zwischen dem Bildgeber 21 und dem Brillenglas 3 ist eine Einkopplungseinrichtung 23 angeordnet, die im vorliegenden Ausführungsbeispiel eine Eintrittsfläche 24, eine erste Spiegelfläche 27 und eine zweite Spiegelfläche 29 aufweist und als Prisma aus Glas oder transparentem Kunststoff ausgebildet ist, wobei die Eintrittsfläche 24 und die Spiegelflächen 27, 29 durch Flächen des Prismas gebildet sind. Wie das die Einkopplungseinichtung 23 bildende Prisma kann auch das Brillenglas 3 aus einem organsichen Glas, d.h. aus einem transparenten Kunststoff, hergestellt sein. Aber auch die Herstellung aus einem mineralischen Glas ist möglich.

Im vorliegenden Ausführungsbeispiel sind der die Einkopplungseinrichtung 23 bildende Block und das Brillenglas 3 als getrennte Einheiten geformt und anschließend miteinander verkittet worden. Der die Einkopplungseinrichtung 23 bildende Block und das Brillenglas 3 können dabei aus demselben oder aus unterschiedlichen Materialien hergestellt sein.

Die Einkopplungsvorrichtung 23 dient außer zum Einkoppeln des vom Bildgeber 21 ausgehenden Abbildungsstrahlengangs in das Brillenglas 3 auch zum Kollimieren der von den Bildpunkten des vom Bildgeber 21 dargestellten Ausgangsbildes ausgehenden divergenten Strahlenbündel des Abbildungsstrahlengangs. Hierzu weisen im vorliegenden Ausführungsbeispiel die Eintrittsfläche 24, die erste Spiegelfläche 27 und die zweite Spiegelfläche 29 entsprechend gekrümmte Flächen auf, wobei die Eintrittsfläche 24 als ellipsoide Fläche ausgebildet ist und die beiden Spiegelflächen 27, 29 jeweils als hyperbolische Flächen ausgebildet sind. Diese Krümmungen stellen die Grundkrümmungen dieser Flächen dar. Im vorliegenden Ausführungsbeispiel sind den Grundkrümmungen dieser Flächen 24, 27, 29 Freiformflächen überlagert, die durch Polynome in x und y gegeben sind, wobei x- und y-Koordinaten eines Koordinatensystems darstellen, dessen z-Achse der optischen Achse des Abbildungsstrahlengangs entspricht. Die z-Koordinate der Flächen in der Abbildungsvorrichtung 23 sind dann durch die Summe der durch eine Kegelschnittfläche gegebenen z-Koordinate (Grundkrümmung) und einer durch das Polynom gegebenen z-Koordinate (Freiformfläche) festgelegt.

Das Brillenglas 3 und die Einkopplungseinrichtung 23 bilden zusammen die Abbildungsoptik der Datenbrille 1, welche ein virtuelles Bild des auf den Bildgeber 21 dargestellten Ausgangsbildes erzeugt.

Von der Einkopplungseinrichtung 23 wird der mittels der Eintrittsfläche 24 und der beiden Spiegelflächen 27, 29 kollimierte Abbildungsstrahlengang über einen Einkopplungsabschnitt des Brillenglases 3 zwischen die Innenfläche 13 und die Außenfläche 17 in das Brillenglas 3 eingekoppelt. Im Brillenglas 3 wird der Abbildungsstrahlengang dann mittels Reflexionen an der Außenfläche 17 und der Innenfläche 13 des Brillenglases 3 zu einer Fresnelstruktur 31 geleitet, von der der kollimierte Abbildungsstrahlengang ausgekoppelt wird, indem er derart in Richtung auf die Innenfläche 17 des Brillenglases 3 abgelenkt wird, dass er durch diese refraktiv in Richtung auf die Austrittspupille 33 der Abbildungsoptik aus dem Brillenglas 3 austritt. Die Austrittspupille 33 befindet sich bei aufgesetzter Datenbrille 1 am Ort der Pupille des Nutzerauges, von dem in Fig. 4 der Augendrehpunkt 35 dargestellt ist.

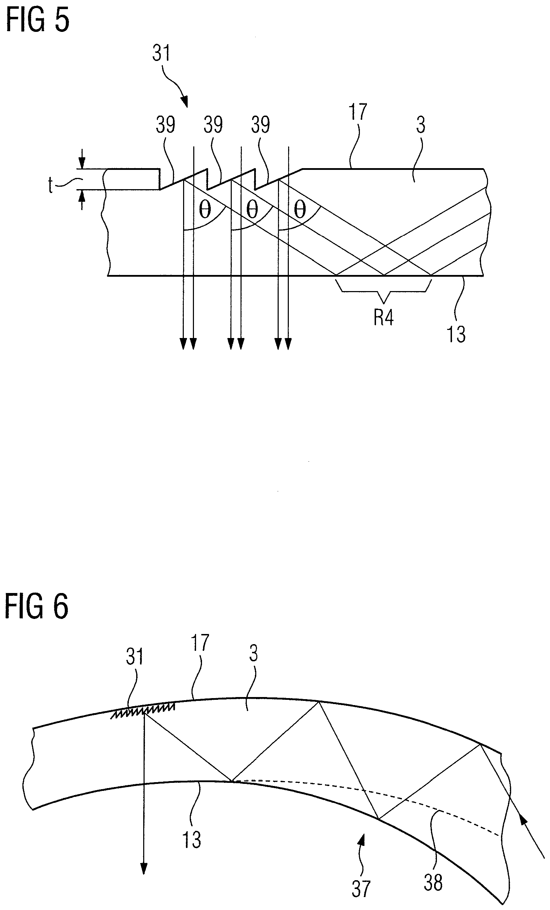

Eine Fresnelstruktur 31, wie sie in der Abbildungsoptik der Datenbrille 1 Verwendung finden kann, ist in Fig. 5 beschrieben. Die gezeigte Fresnelstruktur 31 weist Facetten 39 auf, die im vorliegenden Ausführungsbeispiel so orientiert sind, dass ein auf die Facette 39 auftreffender Nullstrahl des Abbildungsstrahlengangs in Richtung auf die Innenfläche 17 des Brillenglases 3 reflektiert wird und der reflektierte Nullstrahl mit dem auftreffenden Nullstrahl einen Winkel θ von etwa 50 Grad einschließt. Im vorliegenden Ausführungsbeispiel sind die Facetten 39 teilverspiegelt, so dass aus der Umgebung stammende Strahlenbündel die teilverspiegelten Facetten 39 in Richtung auf die Austrittspupille 33 passieren können. Auf diese Weise liegt im Bereich der Austrittspupille 33 ein Strahlengang vor, in dem der Abbildungsstrahlengang mit einem aus der Umgebung stammenden Strahlengang überlagert ist, so dass bei einem Nutzer einer mit der Abbildungsoptik versehenen Datenbrille 1 der Eindruck entsteht, das virtuelle Bild schwebe in der Umgebung.

Auf dem Weg zur Fresnelstruktur 31 erfolgen im Brillenglas 3 des vorliegenden Ausführungsbeispiels nach dem Einkoppeln des Abbildungsstrahlengangs vier Reflexionen R1 bis R4, von denen die erste R1 an der Außenfläche 17 des Brillenglases 3 erfolgt, die zweite Reflexion R2 an der Innenfläche 13 des Brillenglases 3 erfolgt, die dritte Reflexion R3 wiederum an der Außenfläche 17 des Brillenglases 3 erfolgt und die vierte Reflexion R4 schließlich wieder an der Innenfläche 13 des Brillenglases 3 erfolgt. Die Fresnelstruktur 31 befindet sich in der Außenfläche des Brillenglases, wohin der Abbildungsstrahlengang von der vierten Reflexion R4 reflektiert wird. Mittels der Fresnelstruktur 31 wird der Abbildungsstrahlengang dann wie beschrieben in Richtung auf die Austrittspupille der Abbildungsoptik aus dem Brillenglas 3 ausgekoppelt. In Fig. 5 sind ein Mittelstrahl und zwei Randstrahlen eines vom Bildgeber 21 ausgehenden divergenten Strahlenbündels gezeigt. Durch die Kollimation mittels der eine Kollimationsoptik bildenden Einkopplungsvorrichtung 23 liegt im Brillenglas 23 ein weitgehend kollimierter Strahlengang vor, der dann als weitgehend kollimierter Strahlengang von der Fresnelstruktur 31 ausgekoppelt wird.

Im vorliegenden Ausführungsbeispiel werden die Reflexionen R1 bis R4 an der Innenfläche 13 und der Außenfläche 17 des Brillenglases durch Totalreflexionen an der Innenfläche 13 und der Außenfläche 17, die jeweils eine Grenzfläche zu einem optisch dünneren Medium darstellen, realisiert. Sie können grundsätzlich jedoch auch durch reflektierende Beschichtungen auf der Innenfläche 13 und der Außenfläche 17 realisiert sein, was jedoch die Herstellung des Brillenglases aufwändiger gestalten und somit verteuern würde. Grundsätzlich könnten die Reflexionen auch an im Inneren des Brillenglases 3 befindlichen reflektierenden Schichten stattfinden, was jedoch in der Herstellung noch Aufwändiger als das Beschichten der Innen- und Außenfläche des Brillenglases wäre.

Dort, wo die zweite Reflexion R2 an der Innenfläche 13 des Brillenglases 3 stattfindet, ist das Brillenglas 3 mit einer Randanapassung versehen, die im vorliegenden Ausführungsbeispiel als Randverdickung 37 ausgebildet ist. Mit anderen Worten, dort, wo die zweite Reflexion R2 an der Innenfläche 13 des Brillenglases 3 stattfindet ist im vorliegenden Ausführungsbeispiel der Abstand zwischen der Innenfläche 13 und der Außenfläche 17 größer als die Grundkrümmung des Brillenglases 3 vorsehen würde. Die Randanpassung 37 ermöglicht im Vergleich zu einem Brillenglas 3 ohne Randanpassung 37 einen geringeren Footprint Overlap, was wiederum ein größeres Sichtfeld (FOV, field of view) sowie eine größere Eyebox ermöglicht, ohne dass das Brillengalas als Ganzes dicker gestaltet werden muss. Es sei angemerkt, dass das Brillenglas 3 im vorliegenden Ausführungsbeispiel nicht zur Korrektur einer Fehlsichtigkeit ausgebildet ist und daher der Abstand zwischen der Innenfläche 13 und der Außenfläche 17 außerhalb des Randverdickungsbereiches im Wesentlichen konstant ist. Sollte das Brillenglas 3 hingegen eine Form aufweisen, die eine Fehlsichtigkeit korrigiert, so kann das Brillenglas im Bereich der Randanpassung 37 auch dünner sein, als dies die Grundkrümmung des Brillenglases vorschreiben würde. Ob das Brillenglas im Bereich der Randanpassung dünner oder dicker ausgebildet ist kann hierbei auch vom Grad der zu korrigierenden Fehlsichtigkeit abhängen. Um die Beeinträchtigung der Sicht durch die Randanpassung 37 so gering wie möglich zu halten, befindet sich die Randanpassung in einem Randbereich des Brillenglases, also in einem Bereich, der einem großen Sehwinkel entspricht und daher am Rand des Sichtfeldes eines Nutzers liegt, wo er, wenn überhaupt, nur wenig störend ist.

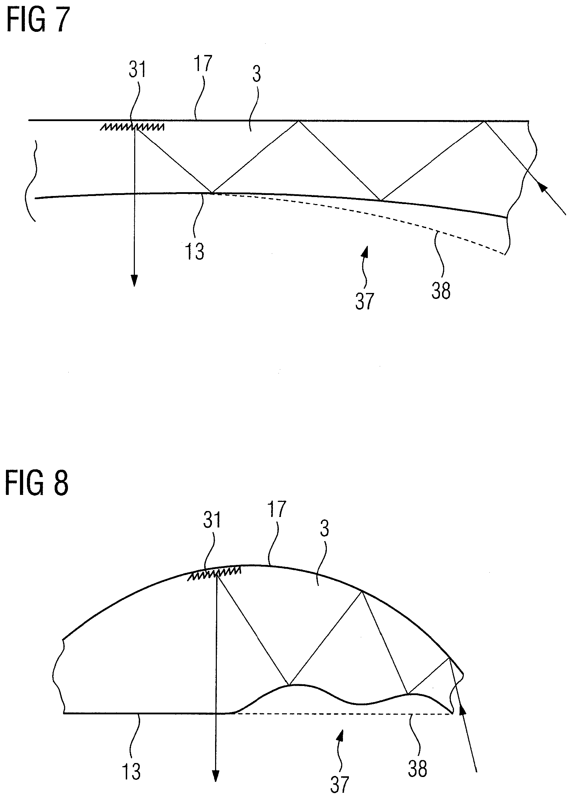

Die Figuren 6 bis 8 zeigen in schematischen Darstellungen den Verlauf der Randanpassung für ein Brillenglas ohne Brechkraft (Fig. 6), ein Brillenglas mit negativer Brechkraft (Fig. 7) und ein Brillenglas mit positiver Brechkraft (Fig. 8). Die Figuren zeigen jeweils ein Brillenglas 3 und die darin angeordnete Auskoppelungsstruktur 31 sowie den mehrfach zwischen der Brillenglasaußenseite 17 und der Brillenglasinnenseite 13 reflektierten Abbildungsstrahlengang. Wie aus den Figuren ersichtlich ist, weisen die Brillenglasinnenseiten 13 jeweils eine Randanpassung 37 auf, wobei bei dem in Figur 6 gezeigten Brillenglas ohne Korrektur einer Fehlsichtigkeit (ohne Brechkraft) die Randanpassung 37 als Randverdickung ausgebildet ist. Der Verlauf der Brillenglasinnenfläche 13, der sich ohne die Randverdickung ergeben würde, ist als Verlauf 38 gestrichelt eingezeichnet.

Im Falle eines Brillenglases 3 mit negativer Brechkraft, wie es in Figur 7 schematisch dargestellt ist, ist die Dicke des Brillenglases im Randbereich des Brillenglases 3 völlig ausreichend. Die zum Minimieren des Footprint Overlaps ausgebildete Randanpassung 37 verringert in diesem Fall die Dicke des Brillenglases im Randbereich. Auch hier ist der Verlauf 38 der Innenfläche 13 des Brillenglases 3, der sich ohne die Randanpassung 37 ergeben würde, gestrichelt eingezeichnet.

Ein Brillenglas 3 mit einer positiven Brechkraft ist in Figur 8 gezeigt. Wie bei dem in Figur 7 gezeigten Brillenglas mit negativer Brechkraft braucht beim Brillenglas 3 mit positiver Brechkraft der Rand des Brillenglases durch die Randanpassung 37 nicht verdickt zu werden. Stattdessen liegt im Bereich der Randanpassung 37 eine Verdünnung des Brillenglases 3 vor. Der Verlauf 38 der Brillenglasinnenfläche 13, der sich ohne die Randanpassung 37 ergeben würde, ist in Figur 8 wie in den Figuren 6 und 7 gestrichelt eingezeichnet. Der Verlauf der Brillenglasinnenfläche 13 im Bereich der Randanpassung 37 ist im vorliegenden Beispiel gewellt ausgebildet. Dies dient dazu, im jeweiligen Reflektionsbereich einen geeigneten Reflektionswinkel zu erhalten.

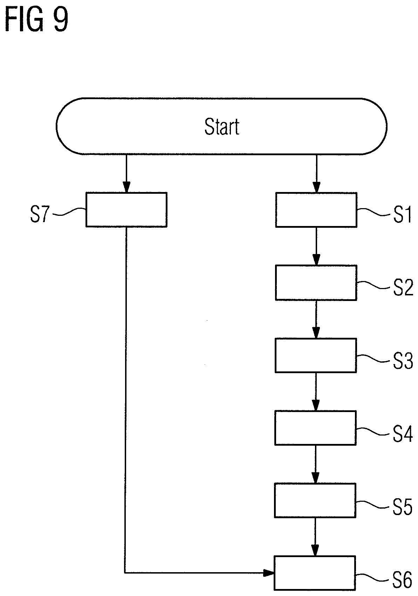

Ein Ausführungsbeispiel für ein Verfahren zum Herstellen eines Brillenglases, wie es mit Bezug auf die Figuren 4 bis 8 beschrieben worden ist, wird nachfolgend mit Bezug auf die Figuren 9 bis 11 beschrieben. Figur 9 zeigt dabei das Verfahren in Form eines Ablaufdiagramms.

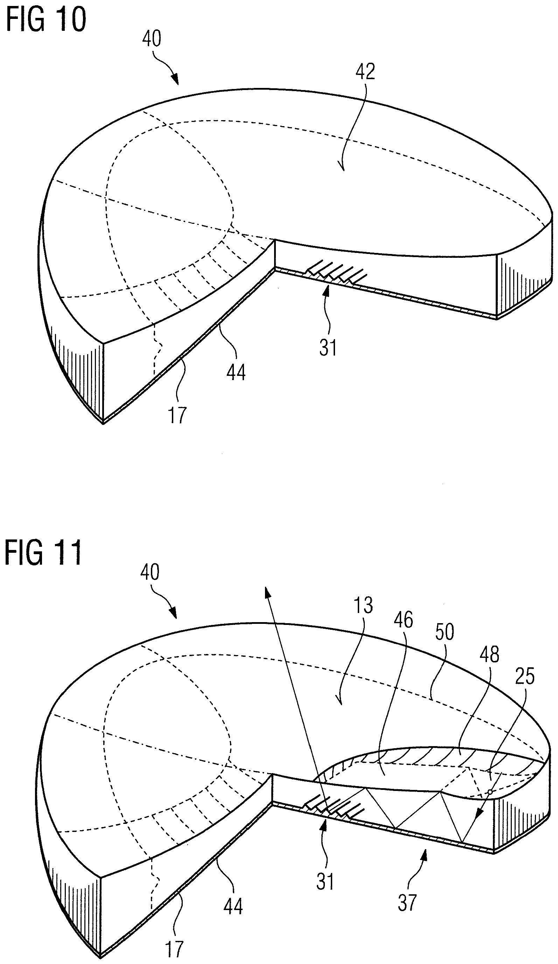

Im vorliegenden Ausführungsbeispiel findet zum Herstellen des Brillenglases ein Brillenglas-Halbfabrikat Verwendung, das aus einem organischen Glasmaterial besteht. Nach dem Starten des Verfahrens wird aus einem Vorrat von Standard-Brillenglas-Halbfabrikaten ein für das herzustellende Brillenglas geeignetes Brillenglas-Halbfabrikat ausgewählt. Ein Beispiel für ein solches Brillenglas-Halbfabrikat 40 ist in Figur 10 dargestellt. Das Brillenglas-Halbfabrikat 40 weist bereits die fertige Brillenglasaußenfläche 17 auf und ist bereits mit der Auskopplungsvorrichtung 31 ausgestattet. Die Auskopplungsvorrichtung 31 ist als Fresnelstruktur ausgebildet, die mit Kleber überdeckt ist. Zudem ist auf die Brillenglasaußenfläche 17 einschließlich der mit Kleber überdeckten Fresnelstruktur eine Folie 44 aufgebracht. Darüber hinaus weist das Brillenglas-Halbfabrikat eine Roh-Innenfläche 42 auf, aus der später die Brillenglasinnenfläche 13 gefertigt wird. Auf die Außenfläche 17 des Brillenglas-Halbfabrikats ist außerdem eine Beschichtung über der Folie aufgebracht (nicht dargestellt). Diese kann einen Hartlack umfassen, der beispielsweise mit einem Tauchbeschichtungs- oder Spin Coating Verfahren aufgebracht wird. Zudem kann die Beschichtung eine finale Antireflexbeschichtung umfassen. Die Roh-Innenfläche 42 des Brillenglas-Halbfabrikats 40 enthält keine Beschichtung, da diese Fläche im Rahmen des Herstellprozesses für das Brillenglas noch spannend bearbeitet wird. In der beschriebenen Form ist das Brillenglas-Halbfabrikat gegen Beschädigung, Verschmutzung und angesprengte Partikel weitgehend geschützt. Es kann aber auch noch zusätzlich mit einer Schutzfolie versehen sein.

Im Rahmen des vorliegenden Ausführungsbeispiels wird ein für die Herstellung des Brillenglases geeignetes Brillenglas-Halbfabrikat 40 aus einem Vorrat von unterschiedlichen Standard-Brillenglas-Halbfabrikaten ausgewählt. Die im Vorrat befindlichen Brillenglas-Halbfabrikate unterscheiden sich im Wesentlichen in den Grundkrümmungen der Brillenglasaußenfläche und der Roh-Innenfläche voneinander. Die genaue Form eines Brillenglas-Halbfabrikates wird dabei im Wesentlichen durch fünf Parameter festgelegt, nämlich dem Krümmungsradius der Brillenglasaußenfläche, dem Krümmungsradius der Brillenglasinnenfläche, dem Durchmesser des Brillenglas-Halbfabrikats, der Dicke des Brillenglas-Halbfabrikats, also den Abstand zwischen der Außenfläche und der Roh-Innenfläche, sowie der Dicke am Rand des Brillenglas-Halbfabrikats, also dem Abstand zwischen der Außenfläche und der Roh-Innenfläche des Brillenglas-Halbfabrikats an seinem äußeren Rand. Dabei sind der Krümmungsradius der Brillenglasaußenfläche, der Durchmesser des Brillenglas-Halbfabrikats, die Dicke des Brillenglas-Halbfabrikats und die Dicke des Brillenglas-Halbfabrikats an seinem Rand als Parameter für verschiedene Standard-Brillenglas-Halbfabrikate vorgegeben. Die Krümmungsradien der Roh-Innenflächen 42 der Standard-Brillenglas-Halbfabrikate werden dann aus den jeweiligen vier vorgegebenen Parameterwerten rechnerisch ermittelt.

Im vorliegenden Beispiel sind die Standard-Brillenglas-Halbfabrikate so abgestuft, dass sie sich jeweils um eine Brechkraft von einer Dioptrie voneinander unterscheiden. Dabei können Wirkungsbereiche ± 1 Dioptrie erzeugt werden, so dass Übergänge, sogenannte Verblendungen, zwischen dem späteren Randanpassungsbereich und den übrigen Bereichen des fertigen Brillenglases sanfter und ästhetisch ansprechender ausgelegt werden können.

Mit sieben verschiedenen Grundkrümmungen lassen sich Standard-Brillenglas-Halbfabrikate herstellen, die 70 % der gängigen Fehlsichtigkeiten korrigieren können. Mit dreizehn Grundkrümmungen können alle Fehlsichtigkeiten korrigiert werden.

Nachdem in Schritt S1 ein geeignetes Brillenglas-Halbfabrikat für das konkrete herzustellende Brillenglas ausgewählt worden ist (etwa im Hinblick auf eine etwa zu korrigierende Fehlsichtigkeit), findet das Herstellen des eigentlichen Brillenglases 3 statt, wobei als wesentlicher Prozess des Herstellungsverfahrens ein CNC-Prozess zur Anwendung kommt, um die Brillenglasinnenfläche 13 aus der Roh-Innenfläche 42 herzuarbeiten (Schritt S2). Hierzu wird das Brillenglas-Halbfabrikat 40 auf einem sogenannten Blockstück befestigt, wobei die Verbindung zwischen der mit der harten Schutzbeschichtung und ggf. einer Schutzfolie versehenden Außenfläche 17 des Brillenglas-Halbfabrikats 40 und des Blockstücks mittels einer niedrig schmelzenden Metalllegierung oder eines Klebepads hergestellt wird. Alternativ kann die Verbindung auch mittels eines Vakuumspannverfahrens hergestellt werden. Das so vorbereitete Brillenglas-Halbfabrikat 40 kommt dann in eine CNC-Maschine, wo die Brillenglasinnenfläche 13 spanend aus der Roh-Innenfläche 42 herausgearbeitet wird.

Die Form der herzustellenden Brillenglasinnenfläche 13 ist dabei in der CNC-Maschine in Form von CNC-Daten hinterlegt, welche die Form der gesamten Innenfläche 13 im selben Koordinatensystem wiedergeben. Dadurch, dass die CNC-Daten die Form der gesamten Innenfläche 13 in einem einzigen Koordinatensystem wiedergeben, ist es möglich, mit dem CNC-Prozess die gesamte Brillenglasinnenfläche, also die Brillenglasinnenfläche 13 im Bereich der Randanpassung 37 und in den übrigen Bereichen des Brillenglases 3, in einem einzigen Arbeitsprozess, der ggf. mehrere Prozessschritte umfassen kann, herzustellen. Wenn dagegen für die Brillenglasinnenfläche 13 im Bereich der Randanpassung 37 wie im Stand der Technik ein anderer CNC-Datensatz als für die übrigen Bereiche der Brillenglasinnenfläche 13 Verwendung findet, müssen diese Bereiche einem anderen Arbeitsprozess als die Brillenglasinnenfläche im Bereich der Randanpassung hergestellt werden, was dazu führt, dass ein Übergang zwischen dem Randanpassungsbereich und den übrigen Bereichen der Brillenglasinnenfläche nicht möglich ist, ohne an derjenigen Grenzlinie, an der das Koordinatensystem des Randanpassungsbereichs an das Koordinatensystem der übrigen Bereiche des Brillenglases angrenzt, einen Knick zu erzeugen. Ein solcher Knick würde sich im Hinblick auf den Footprint Overlap negativ bemerkbar machen. Um einen solchen Knick zu vermeiden, muss die fertige Brillenglasinnenfläche 13 eine stetig differenzierbare Fläche sein, was dadurch erreicht werden kann, dass die Form der gesamten herzustellenden Brillenglasinnenfläche 13 in einem einzigen CNC-Datensatz festgelegt ist, so dass eine Grenzlinie zwischen zwei mit verschiedenen CNC-Datensätze hergestellten Bereichen vermieden wird.

Der in Schritt S2 zur Anwendung kommende spanende Arbeitsprozess zum Herstellen der Brillenglasinnenfläche 13 aus der Roh-Innenfläche 42 kann mehrere Prozessschritte umfassen. Typischerweise umfasst er einen Frässchritt, einen Vordrehschritt, einen Feindrehschritt und einen Polierschritt, wobei die Menge an abgetragenem Material mit jedem dieser Schritte abnimmt. Am Ende des Polierschrittes ist dann die in den CNC-Daten definierte Brillenglasinnenfläche 13 hergestellt. Im Rahmen des Prozessschrittes S2 umfasst das Herstellen der Bereiche der Brillenglasinnenfläche 13, die nicht zum Bereich der Randanpassung 37 gehören, auch das Herstellen der Eintrittsfläche 25 für den Abbildungsstrahlengang.

Das nach dem Prozessschritt S2 vorliegende Brillenglas-Halbfabrikat 40 wird nun weiteren Verarbeitungsschritten unterzogen, in denen eine harte Beschichtung, beispielsweise mittels Spin-Coatings wie es etwa in DE 10 2012 202 695 A1 beschrieben ist, aufgebracht wird (Schritt S3) und anschließend eine Antireflexbeschichtung zur Entspiegelung aufgebracht wird (S4). Beim Aufbringen der Antireflexbeschichtung wird die Einkopplungsfläche 25 abgedeckt, damit diese keine Antireflexbeschichtung erhält. Die Antireflexbeschichtung würde das Einkoppeln des Abbildungsstrahlengangs in den Lichtkanal stören. Das Halbfabrikat nach Abschluss des spanenden Bearbeitungsprozesses und der Beschichtungsprozesse ist in Figur 11 dargestellt. In dieser Figur sind die Einkopplungsfläche 25, der im Bereich der Randanpassung 37 vorhandene Lichtkanal 46 sowie der Übergang 48 zwischen der Einkopplungsfläche 25 und der Lichtkanalfläche 46 einerseits und der restlichen Brillenglasinnenfläche andererseits dargestellt. Außerdem ist der Verlauf des Abbildungsstrahlengangs durch die Eintrittsfläche 25 und den im Bereich der Randanpassung 37 gebildeten Lichtkanal 46 zur Auskopplungsstruktur 31 und von dort in Richtung auf das Auge dargestellt.

Nach dem Aufbringen der Beschichtungen in den Schritten S2 und S4 wird das Brillenglas-Halbfabrikat entlang der Linie 50 zugeschnitten, um aus dem Brillenglas-Halbfabrikat 40 das Brillenglas 3 herzustellen (Schritt S5). Damit ist die Herstellung des Brillenglases 3 abgeschlossen.

Um aus dem Brillenglas 3 eine Abbildungsoptik für eine Datenbrille herzustellen, kann in einem weiteren Schritt S6 ein Prisma, welches eine Einkopplungseinrichtung zum Einkoppeln des Abbildungsstrahlengangs in den Lichtkanal 46 des Brillenglases darstellt, über eine spezielle Prismenfläche mit der Einkopplungsfläche 25 im Brillenglas verklebt werden. Am Ende des Schrittes S6 liegt bereits eine vollständige Abbildungsoptik vor, die schließlich in eine Datenbrille eingebaut werden kann.

Im vorliegenden Beispiel liegt für jedes Standard-Brillenglas-Halbfabrikat ein eigener CNC-Datensatz vor, welcher eine an das jeweilige Standard-Brillenglas-Halbfabrikat angepasste Innenfläche 42 im Bereich des Lichtkanals 46, also auch im Bereich der Randanpassung 37, enthält. Entsprechend enthält auch jeder CNC-Datensatz einen auf das jeweilige Standard-Brillenglas-Halbfabrikat angepasste Einkopplungsfläche 25. Darüber hinaus liegt im vorliegenden Ausführungsbeispiel für jedes Standard-Brillenglas-Halbfabrikat ein eigenes Prisma zum Einkoppeln des Abbildungsstrahlengangs in den Lichtkanal 46 vor. Das in Fig. 9 dargestellte Verfahren umfasst daher im vorliegenden Fall auch einen Schritt S7 des Auswählens des zu dem ausgewählten Standard-Brillenglas-Halbfabrikat passenden Prismas.

In einer Datenbrille ist typischerweise eines der beiden Brillengläser als Abbildungsoptik ausgebildet. Das andere Brillenglas ist dann als normales Brillenglas, also als ein Brillenglas ohne Lichtkanal und ohne Einkopplungsfläche sowie ohne Auskopplungsstruktur ausgebildet. Eine Randanpassung ist dementsprechend nicht nötig. Das Herstellen eines solchen Brillenglases kann mit einem sehr ähnlichen wie dem beschriebenen Verfahren erfolgen, wobei die für dieses Brillenglas verwendeten Standard-Brillenglas-Halbfabrikate keinen Lichtkanal berücksichtigen und keine Auskopplungsstruktur enthalten. Außerdem enthalten die CNC-Daten für ein solches Brillenglas lediglich Daten, die eine Standard-Innenfläche mit oder ohne Korrektur einer Fehlsichtigkeit und ohne eine Randanpassung definieren.

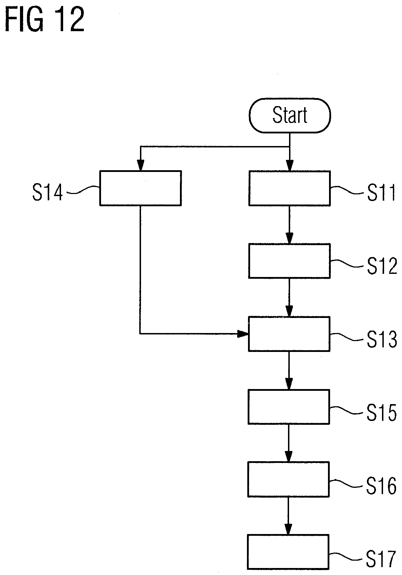

Ein Verfahren zum Herstellen eines Standard-Brillenglas-Halbfabrikats 40 wird nachfolgend mit Bezug auf Figur 12 beschrieben. Nach dem Starten des Verfahrens wird ein Rohling für das Brillenglas-Halbfabrikat mittels eines Gussverfahrens geformt (Schritt S11). Im vorliegenden Ausführungsbeispiel findet ein organisches Glasmaterial, also ein Kunststoff, Verwendung, aus dem der Rohling mittels eines Spritzgussverfahrens geformt wird. Der aus dem Spritzguss resultierende Rohling weist eine Brillenglasaußenfläche aus, deren Form der Endform der Brillenglasaußenfläche 17 entspricht, und eine Roh-Innenfläche 42, aus der wie mit Bezug auf Figur 9 beschrieben worden ist, später die Brillenglasinnenfläche 13 herausgearbeitet wird. Außerdem wird mit dem Spritzgussverfahren bereits die Auskopplungsstruktur geformt, die im vorliegenden Ausführungsbeispiel von der Formfläche der Gießform als Fresnelstruktur in die Außenfläche eingeprägt wird. In Schritt S12 wird auf die in die Außenfläche eingeprägt Fresnelstruktur eine Beschichtung aufgebracht, um die Facetten der Fresnelstruktur teilzuverspiegeln. Danach wird in Schritt S13 eine sphärisch verformte Folie aus einem ähnlichen oder vorzugsweise identischen Material wie das beim Spritzguss verwendete Material auf die Außenfläche des Brillenglas-Halbfabrikats aufgebracht, wobei die Fresnelstruktur mit einem Kleber verfüllt wird. Hierzu wird die Folie in einem Vakuumdosierverfahren mit Epoxidkleber benetzt und blasenfrei auf die Außenfläche des Brillenglas-Halbfabrikats aufgebracht. Das Herstellen der sphärisch verformten Folie ist in Figur 12 als Schritt S14 dargestellt. Alternativ zum Aufbringen der sphärisch verformten Folie kann in Schritt S13 die in die Außenfläche eingeprägte und beschichtete Fresnelstruktur mit einem Füllstück ausgefüllt werden. Das Füllstück wird in diesem Fall in einem eigenen Spritzgussschritt, der dann an die Stelle des Schrittes S14 tritt, hergestellt und ist derart an die ausgeprägte Fresnelstruktur angepasst, dass nach dem Einsetzen des Füllstücks in die beschichtete Fresnelstruktur die Krümmung der Außenfläche des Brillenglas-Halbfabrikats im Bereich der Fresnelstruktur fortgeführt ist. Wenn mit dem Verfahren zum Herstellen des Brillenglas-Halbfabrikats eine Mehrzahl von Standard-Brillenglas-Halbfabrikaten hergestellt wird, die sich in den Krümmungen ihrer Außenfläche und ggf. der Form der Fresnelstruktur voneinander unterscheiden, wird für jedes Standard-Brillenglas-Halbfabrikat das jeweils passende Füllstück hergestellt.

Nach dem Aufbringen der sphärisch verformten Folie auf die Außenfläche des Brillenglas-Halbfabrikats erfolgt in Schritt S15 das Aufbringen einer Hartbeschichtung. Das Aufbringen der Hartbeschichtung kann beispielsweise mittels eines Tauchbeschichtungs- oder eines Spin-Coating-Prozesses erfolgen. Abschließend wird in Schritt S16 eine Antireflexbeschichtung aufgebracht, um eine Entspiegelung der Außenfläche zu erreichen. Das Aufbringen der Antireflexbeschichtung kann mit einem geeigneten Beschichtungsprozess, beispielsweise mittels Spin-Coatings oder mittels physikalischen Abscheidens aus der Gasphase (PVD, Physical Vapour Deposition), erfolgen. Sofern nicht sofort eine Weiterbearbeitung des Brillenglas-Halbfabrikats, wie sie mit Bezug auf Figur 9 beschrieben worden ist, erfolgt, kann in Schritt S17 eine Lagerung zur späteren Verwendung in einem Verfahren zur Herstellung eines Brillenglases erfolgen. Optional besteht dabei die Möglichkeit, die Außenfläche des Brillenglases vor der Lagerung mit einer Schutzfolie zu versehen.

Mit einem sehr ähnlichen Verfahren kann auch ein Brillenglas-Halbfabrikat für das zweite Brillenglas einer Datenbrille hergestellt werden. Ein Verfahren zum Herstellen eines solchen Brillenglases würde die Schritte S12, S13 und S14 nicht enthalten. Außerdem würde die im Spritzgussprozess S11 verwendete Form andere Formflächen zum Formen der Außenfläche 17 und der Roh-Innenfläche 42 aufweisen, da in der Außenfläche 17 keine Fresnelstruktur 31 ausgebildet werden muss und in der Roh-Innenfläche 42 kein Randanpassungsbereich 37 berücksichtigt werden muss. Im Übrigen würde sich das Verfahren nicht von dem mit Bezug auf Figur 12 beschriebenen Verfahren unterscheiden.

Die vorliegende Erfindung wurde unter Zuhilfenahme von Ausführungsbeispielen zu Erläuterungszwecken ausführlich beschrieben. Es versteht sich jedoch, dass Abweichungen von den Ausführungsbeispielen möglich sind. So kann beispielsweise das Brillenglas-Halbfabrikat statt aus einem organischen Glasmaterial wie im Ausführungsbeispiel alternativ aus einem mineralischen Glasmaterial hergestellt sein. Selbstverständlich wären die hierfür nötigen Gießprozesse andere als beim Gießen eines organischen Glasmaterials. Ein Fachmann kann jedoch ohne weiteres erkennen, welche Abwandlungen des Gießprozesses nötig sind, wenn statt eines organischen Glasmaterials ein mineralisches Glasmaterial Verwendung finden soll. Auch ist es nicht zwingend notwendig, die Auskopplungsstruktur als Fresnelstruktur auszubilden. Grundsätzlich besteht auch die Möglichkeit, anstatt der reflektiven Fresnelstruktur zum Auskoppeln bspw. eine diffraktive Auskopplungsstruktur zu verwenden. Es ist auch nicht notwendig, dass ein Vorrat an Standard-Brillenglas-Halbfabrikaten angelegt wird. Bspw. kann das mit Bezug auf Figur 9 beschriebene Brillenglas-Herstellungsverfahren unmittelbar auf das mit Bezug auf Figur 12 beschrieben Herstellungsverfahren für ein Brillenglas-Halbfabrikat erfolgen. In diesem Fall wird ein für das Brillenglas-Herstellungsverfahren geeignetes Brillenglas-Halbfabrikat speziell für das herzustellende Brillenglas angefertigt. Die vorliegende Erfindung soll daher nicht durch die Ausführungsbeispiele definiert sein, sondern die beigefügten Ansprüche.

## Patentansprüche

1. Verfahren zum Herstellen eines Brillenglases (3) für eine Abbildungsoptik zum Erzeugen eines virtuellen Bildes von einem auf einem Bildgeber (21) dargestellten Ausgangsbild, das eine dem Auge zuzuwendende Innenfläche (13) und eine vom Auge abzuwendende Außenfläche (17) aufweist und in dem ein Einkopplungsabschnitt (25) zum Einkoppeln eines Abbildungsstrahlengangs zwischen die Innenfläche (13) und die Außenfläche (17) sowie eine Auskopplungsstruktur (31) zum Auskoppeln des Abbildungsstrahlengangs aus dem Brillenglas (3) in Richtung auf das Auge vorhanden sind, wobei der Einkopplungsabschnitt (25) derart im Brillenglas (3) angeordnet ist, dass ein durch den Einkopplungsabschnitt (25) in das Brillenglas (3) eingekoppelter Abbildungsstrahlengang durch Reflexionen zwischen der Innenfläche (13) und der Außenfläche (17) des Brillenglases (3) zur Auskopplungsstruktur (31) geleitet wird, wobei
- zwischen dem Einkopplungsabschnitt (25) und der Auskopplungsstruktur (31) eine Randanpassung (37) im Brillenglas (3) vorhanden ist, die durch eine entsprechende Form der Innenfläche (13) realisiert ist,
- die Innenfläche (13) in demjenigen Bereich des Brillenglases (3), durch den das Auge bei Geradeaussicht schaut, im Wesentlichen eine Krümmung aufweist, die an die Krümmung einer gewöhnlichen Innenfläche eines Brillenglases mit oder ohne Korrektur einer Fehlsichtigkeit so weitgehend angenähert ist, dass durch sie bei Geradeaussicht keine wahrnehmbaren optischen Abbildungsfehler induziert werden, und im Bereich der Randanpassung (37) eine von der Krümmung der gewöhnlichen Innenfläche stärker abweichende Form aufweist, die das Leiten eines durch den Einkopplungsabschnitt (25) in das Brillenglas (3) eingekoppelten Abbildungsstrahlengangs durch Reflexionen zwischen der Innenfläche (13) und der Außenfläche (17) des Brillenglases (3) zur Auskopplungsstruktur (31) ermöglicht, und **dadurch gekennzeichnet, dass**
- die gesamte Innenfläche (13) des Brillenglases (3) eine einzige Freiformfläche ist, wobei das Verfahren die Schritte umfasst:
- Bereitstellen eines Brillenglas-Halbfabrikats (40) aus einem Glasmaterial, wobei das Brillenglas-Halbfabrikat (40) bereits die Auskopplungstruktur (31), die Außenfläche (17) des späteren Brillenglases (3) und eine Roh-Innenfläche (42) des späteren Brillenglases (3) besitzt;
- Herstellen des Brillenglases (3) aus dem Brillenglas-Halbfabrikat (40), wobei mittels eines CNC-Prozesses auf der Basis hinterlegter CNC-Daten, die für die gesamte Innenfläche (13) in demselben Koordinatensystem definiert sind, die Innenfläche (13) des Brillenglases (3) aus der Roh-Innenfläche (42) des Brillenglas-Halbfabrikats (40) in einem einzigen Verfahrensschritt hergestellt wird.

2. Verfahren nach Anspruch 1, in dem das Brillenglas-Halbfabrikat (40) aus einer vorgegebenen Anzahl von Standard-Brillenglas-Halbfabrikaten ausgewählt wird, die sich dadurch voneinander unterscheiden, dass die Außenflächen (17) und die Roh-Innenflächen (42) verschiedener Standard-Brillenglas-Halbfabrikate jeweils von den Krümmungen anderer Standard-Brillenglas-Halbfabrikate verschiedene Krümmungen aufweisen, wobei die Krümmungen aus einer Anzahl von Grundkrümmungen ausgewählt sind.

3. Verfahren nach Anspruch 2, in dem für jedes Standard-Brillenglas-Halbfabrikat eine eigene Klasse von CNC-Daten vorhanden ist, wobei sich die Klassen von CNC-Daten zumindest durch die Definitionen der Brillenglasinnenfläche (13) im Bereich der Randanpassung (37) voneinander unterscheiden

4. Verfahren nach einem der Ansprüche 1 bis 3, in dem die CNC-Daten eine an jedem Punkt stetig differenzierbare Fläche definieren.

5. Verfahren nach einem der Ansprüche 1 bis 4, in dem beim Herstellen des Brillenglas-Halbfabrikates (40) oder beim Herstellen der Innenfläche (13) des Brillenglases (3) aus der Roh-Innenfläche (42) ein Einkopplungsabschnitt (25) zum Einkoppeln eines Abbildungsstrahlengangs hergestellt wird.

6. Verfahren nach Anspruch 5, welches außerdem einen Schritt des Herstellens einer Einkopplungseinrichtung (23) und in dem das Herstellen des Brillenglases (3) aus dem Brillenglas-Halbfabrikat (40) einen Schritt des Verbindens der Einkopplungseinrichtung (23) mit dem Einkopplungsabschnitt (25) umfasst.

## Claims

1. Method for producing a spectacle lens (3) for an imaging optical unit for generating a virtual image of an initial image represented on an image generator (21), which has an inner surface (13), facing the eye, and an outer surface (17), facing away from the eye, and in which an input coupling section (25) for coupling an imaging beam path in between the inner surface (13) and the outer surface (17) and an output coupling structure (31) for coupling the imaging beam path out of the spectacle lens (3) in the direction of the eye are provided, wherein the input coupling section (25) is arranged in the spectacle lens (3) such that an imaging beam path, coupled into the spectacle lens (3) through the input coupling section (25), is guided to the output coupling structure (31) by way of reflections between the inner surface (13) and the outer surface (17) of the spectacle lens (3), wherein
- situated between the input coupling section (25) and the output coupling structure (31) in the spectacle lens (3) is a periphery adaptation (37) that is implemented by a corresponding shape of the inner surface (13),
- in that region of the spectacle lens (3) through which the eye looks when it looks straight ahead, the inner surface (13) has substantially a curvature that is approximated to the curvature of a typical inner surface of a spectacle lens with or without correction of a refractive error to such an extent that it does not induce any optical aberrations that are perceivable when looking straight ahead, and, in the region of the periphery adaptation (37), it has a shape that deviates more strongly from the curvature of the typical inner surface and makes possible the guidance of an imaging beam path, which has been coupled into the spectacle lens (3) through the input coupling section (25), by way of reflections between the inner surface (13) and the outer surface (17) of the spectacle lens (3) to the output coupling structure (31), and **characterized in that**
- the entire inner surface (13) of the spectacle lens (3) is a single free-form surface, wherein the method comprises the steps of:
- providing a spectacle lens semifinished product (40) from a glass material, wherein the spectacle lens semifinished product (40) already has the output coupling structure (31), the outer surface (17) of the spectacle lens to be produced (3) and an unfinished inner surface (42) of the spectacle lens to be produced (3);
- producing the spectacle lens (3) from the spectacle lens semifinished product (40), wherein a CNC process is used to produce the inner surface (13) of the spectacle lens (3) from the unfinished inner surface (42) of the spectacle lens semifinished product (40) on the basis of stored CNC data, which are defined for the entire inner surface (13) in the same coordinate system, in a single method step.

2. Method according to Claim 1, in which the spectacle lens semifinished product (40) is selected from a specified number of standard spectacle lens semifinished products that differ from one another in that the outer surfaces (17) and the unfinished inner surfaces (42) of different standard spectacle lens semifinished products each have curvatures that differ from the curvatures of other standard spectacle lens semifinished products, wherein the curvatures are selected from a number of basic curvatures.

3. Method according to Claim 2, in which, for each standard spectacle lens semifinished product, a separate class of CNC data is provided, wherein the classes of CNC data differ from one another at least by the definitions of the spectacle lens inner surface (13) in the region of the periphery adaptation (37).

4. Method according to one of Claims 1 to 3, in which the CNC data define a surface that is continuously differentiable at each point.

5. Method according to one of Claims 1 to 4, in which an input coupling section (25) for input coupling of an imaging beam path is produced in the production of the spectacle lens semifinished product (40) or in the production of the inner surface (13) of the spectacle lens (3) from the unfinished inner surface (42).

6. Method according to Claim 5, which additionally comprises a step of producing an input coupling device (23) and in which producing the spectacle lens (3) from the spectacle lens semifinished product (40) comprises a step of connecting the input coupling device (23) to the input coupling section (25).

## Revendications

1. Procédé de fabrication d'un verre de lunettes (3) qui est destiné à une optique de reproduction pour générer une image virtuelle à partir d'une image initiale présentée sur un imageur (21) et qui comporte une surface intérieure (13) dirigée vers l'œil et une surface extérieure (17) dirigée à l'opposé de l'œil et dans lequel une portion d'injection par couplage (25) destinée à injecter par couplage un trajet de faisceau de reproduction entre la surface intérieure (13) et la surface extérieure (17) et une structure de sortie par couplage (31) destinée à sortir par couplage le trajet de faisceau de reproduction depuis le verre de lunettes (3) en direction de l'œil, la portion d'injection par couplage (25) étant disposée dans le verre de lunettes (3) de manière à ce qu'un trajet de faisceau de reproduction, injecté par couplage dans le verre de lunettes (3) par le biais de la portion d'injection par couplage (25), soit dirigé par des réflexions entre la surface intérieure (13) et la surface extérieure (17) du verre de lunettes (3) en direction de la structure de sortie par couplage (31),
- une adaptation de bord (37) dans le verre de lunettes (3), laquelle est réalisée par une forme correspondante de la surface intérieure (13), étant présente entre la portion d'injection par couplage (25) et la structure de sortie par couplage (31),
- la surface intérieure (13) présentant, dans la zone du verre de lunettes (3) à travers laquelle l'œil regarde lors d'une vision en ligne droite, sensiblement une courbure qui s'approche dans une large mesure de la courbure d'une surface intérieure habituelle d'un verre de lunettes avec ou sans correction de l'amétropie de façon à n'induire aucune erreur de reproduction optique perceptible lors d'une vision en ligne droite, et présentant dans la zone d'adaptation de bord (37) une forme qui s'écarte davantage de la courbure de la surface intérieure habituelle et qui permet le guidage d'un trajet de faisceau de reproduction, injecté par couplage dans le verre de lunettes (3) par le biais de la portion d'injection par couplage (25), par des réflexions entre la surface intérieure (13) et la surface extérieure (17) du verre de lunettes (3) en direction de la structure de sortie par couplage (31), et **caractérisé en ce que**
- la surface intérieure totale (13) du verre de lunettes (3) est une surface de forme libre unique, le procédé comprenant les étapes suivantes :
- fournir un produit de verre de lunettes semi-fini (40) en verre, le produit de verre de lunettes semi-fini (40) possédant déjà la structure de sortie par couplage (31), la surface extérieure (17) du verre de lunettes ultérieur (3) et une surface intérieure brute (42) du verre de lunettes ultérieur (3);
- fabriquer le verre de lunettes (3) à partir du produit de verre de lunettes semi-fini (40), la surface intérieure (13) du verre de lunettes (3) étant fabriquée en une seule étape de procédé à partir de la surface intérieure brute (42) du produit de verre de lunettes semi-fini (40) au moyen d'un processus CNC basé sur des données CNC stockées, qui sont définies pour la surface intérieure totale (13) dans le même système de coordonnées.

2. Procédé selon la revendication 1, dans lequel le produit de verre de lunettes semi-fini (40) est choisi parmi un nombre spécifié de produits de verre de lunettes semi-finis standards, qui diffèrent les uns des autres en ce que les surfaces extérieures (17) et les surfaces intérieures brutes (42) de différents produits de verre de lunettes semi-finis standards présentent chacune des courbures qui sont différentes des courbures d'autres produits de verre de lunettes semi-finis standards, les courbures étant sélectionnées parmi un certain nombre de courbures de base.

3. Procédé selon la revendication 2, dans lequel une classe distincte de données CNC est disponible pour chaque produit de verre de lunettes semi-fini standard, les classes de données CNC se distinguant au moins par les définitions de la surface intérieure (13) de verre de lunettes dans la zone d'adaptation de bords (37).

4. Procédé selon l'une des revendications 1 à 3, dans lequel les données CNC définissent une surface continûment différentiable en chaque point.

5. Procédé selon l'une des revendications 1 à 4, dans lequel une portion d'injection par couplage (25) destinée à injecter par couplage un trajet de faisceau de reproduction est réalisée lors de la fabrication du produit de verre de lunettes semi-fini (40) ou lors de la fabrication de la surface intérieure (13) du verre de lunettes (3) à partir de la surface intérieure brute (42) .

6. Procédé selon la revendication 5, lequel comprend en outre une étape de fabrication d'un dispositif d'injection par couplage (23) et dans lequel la fabrication du verre de lunettes (3) à partir du produit de verre de lunettes semi-fini (40) comprend une étape de liaison du dispositif d'injection par couplage (23) à la portion d'injection par couplage.
